# EUROPEAN PATENT SPECIFICATION

(11) **EP 3 045 307 B1**
(45) Date of publication and mention of the grant of the patent: **06.11.2019**
(21) Application number: 15184744.9
(22) Date of filing: 10.09.2015
(51) Int. Cl.: B32B 7/12, B32B 7/14, B32B 27/08, B32B 27/36, B32B 3/06, B32B 3/08, G03H 1/02, G03H 1/00, B42D 25/455, B42D 25/46, B42D 25/328, B42D 25/47

(54) **LAMINATED CREDENTIAL**
LAMINIERTER BERECHTIGUNGSNACHWEIS
JUSTIFICATIF D'IDENTITÉ STRATIFIÉE

(30) Priority: 12.09.2014 GB 201416181
(43) Date of publication of application: 20.07.2016
(73) Proprietor: Andrews & Wykeham Limited, Hampshire RG24 8LJ (GB)
(72) Inventor: KELLY, Dennis Allen, Wollaston, Northamptonshire NN29 7QA (GB); ZOLOTUKHIN, Max, Basingstoke, Hampshire RG25 2BE (GB); MABERLEY, Kevin John, Newbury, Berkshire RG20 4SU (GB); GOVERE, Matifadza, Woolwich, London SE18 6AJ (GB); JAMIESON, Kate, Reading, Berkshire RG7 1WJ (GB)
(74) Representative: Barker Brettell LLP

(56) References cited:
- EP-A1- 1 832 439
- EP-A1- 2 109 014
- WO-A1-2014/029717
- WO-A1-2014/077256
- WO-A1-2014/126025
- WO-A2-2009/113094
- US-A1- 2013 113 201

## Description

### Technical Field

The present invention relates to a laminated credential.

### Background

Laminated credentials are known to be used as identity cards and other documents, such as data pages of passports. Such laminates include a number of layers which are laminated together, and which include a security feature, such as a hologram, to provide a visual indication of the authenticity of the credential and protection of personal data entered on the credential. Laminated credentials made of durable plastics such as polycarbonate have been accepted as standard for high-durability identity documents with a typical lifespan of ten years. However, such known solutions can be costly, prone to tampering, and/or can produce unsatisfactory finishes.

WO 2014/029717 discloses a method for producing a laminated credential in which apertures through the layers are provisioned to allow flow-through of polycarbonate to directly fuse a holographic insert to an adjacent layer of polycarbonate.

WO200911394 discloses an holographic design comprising a releasable PET or BOPP layer and a embossed holographic design, wherein one side of the design is provided with an adhesive in a pattern.

US2013113201 discloses a holographic security thread for use in producing a card-shaped data carrier, wherein the holographic feature is UV cast onto a polycarbonate layer, and wherein one side of the security thread is provided with an heat sealable lacquer.

We have devised an improved credential laminate.

### Summary

According to the first aspect of the invention there is provided a holographic insert according to claim 1.

According to a second aspect of the invention there is provided a method of producing a laminated credential according to claim 10.

According to a third aspect of the invention there is provided a laminated credential according to claim 15.

The invention may comprise one or more features as described in the dependent claims, the detailed description and/or as shown in the drawings.

### Brief Description of the drawings

Various aspects of the invention will now be described, by way of example only, with reference to the following drawings in which:
**Figure 1** is a cross-section of a laminated credential,
**Figure 2** is a plan view of the laminated credential of Figure 1, where the holographic insert is a stripe.
**Figure 3** is a plan view of the laminated credential of Figure 1, where the holographic insert is a patch,
**Figure 4** is a cross-section of the laminated credential of Figure 1 during a manufacturing step, and
**Figure 5** is a plan view of a holographic insert in stripe and patch form.

### Detailed Description

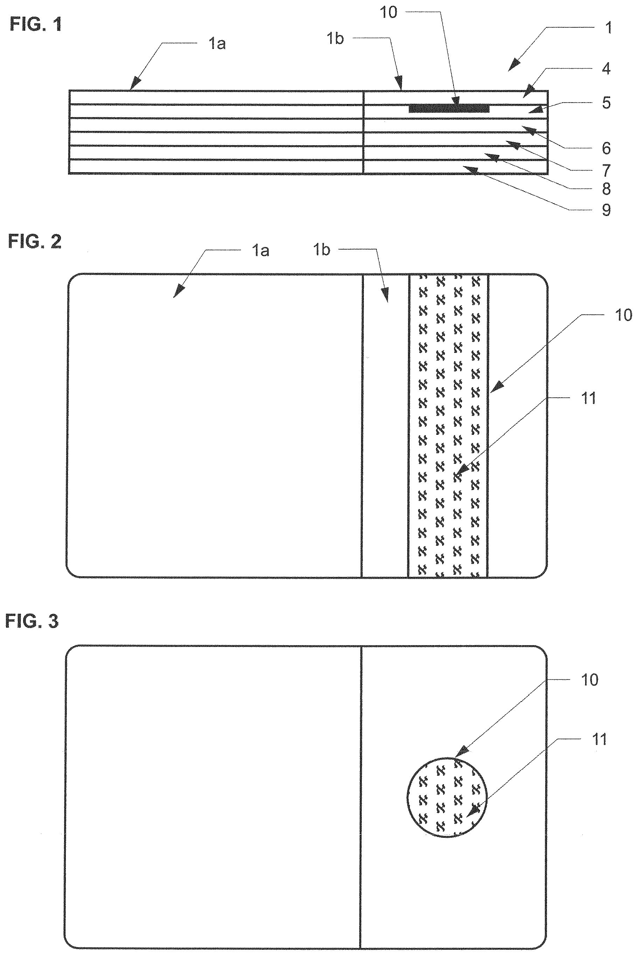

There will now be described a laminated credential, and a method of producing the same. Figure 1 shows an example of such a credential 1, which may be an identity card, or a data page for a passport. The credential comprises a plurality of transparent or opaque layers or substrates which are laminated together. As will be described in more detail below, the credential includes a holographic insert 10 which provides a visible authenticating security feature. Advantageously, the insert is completely assimilated within the card. In the example described, the credential includes an opaque part and a (transparent) windowed part, as indicated by 1a and 1b respectively.

An exemplary method of producing the holographic insert is first described. The insert comprises a partially holographic 'stripe' (in the form of a strip) or patch deployed between the transparent or partially transparent top layer 4 and the second layer 5 of a polycarbonate document, or between any further transparent or partially transparent layers 6 to 9, of the credential. The layers/substrates 4 and 5 are made of polycarbonate material meaning that they substantially comprise polycarbonate. The insert is manufactured by embossing a holographic feature on a polycarbonate film.

The holographic feature (shown schematically by reference numeral 11 in Figures 2 and 3) includes areas of embossed or UV cast holographic micro-structure. The polycarbonate film is also provided with a patterned reflective coating, metallic or otherwise (eg largely transparent high refractive index ZnS or TiO2 reflective coating), largely overlapping with the areas of the holographic micro-structure. Such coating may be provided by all-over metallisation and subsequent patterned de-metallisation by chemical, laser or other methods, or by selective metallisation.

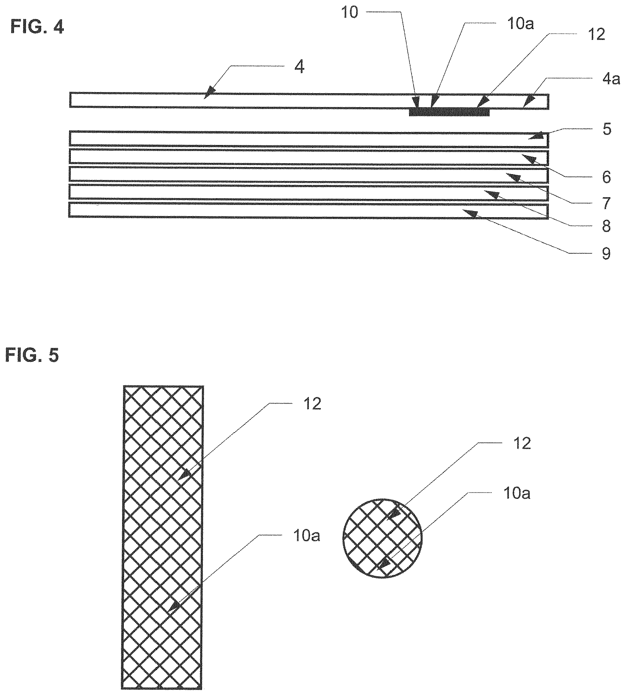

The insert 10 may also be provided with a heat or pressure-sensitive adhesive on one or both sides of the film. With reference to Figure 5, the adhesive 12 is (schematically) shown in a criss-cross pattern. In this example, the adhesive is provided on the same side, surface 10a, of the film on which the holographic feature is provided (although the holographic representation of the holographic feature is omitted for clarity). The holographic feature may also be provided on the opposite surface of the film from the adhesive. As can be seen, the majority of the surface area of the side on which the adhesive is provided is free of adhesive in order to enable direct bonding by thermo-compression between the polycarbonate material of the insert and the adjacent polycarbonate layers of the credential on both sides of the insert. The application of the adhesive may be by way of by methods such as gravure or flexo coating/printing. Although a continuous pattern of adhesive is shown, in other embodiments, a pattern or field of discrete/discontinuous adhesive regions may be provided, and indeed a discrete adhesive may be combined with discontinuous arrangement. The thickness of the insert may be the in the range of 30 micrometres to 50 micrometres, prior to incorporation with the credential structure, and is generally of smaller thickness than at least one of the polycarbonate substrates between which it is located.

The insert may conveniently be provided in wound form on a reel. To create a stripe in the credential, reel-wound tape may be provided on a release liner and slit to the required width. A suitable length of the tape can then be used.

To create a patch in the credential, the insert material can be provided on a release liner, die cut to size, and feature registration marks for further application to the polycarbonate substrate in register. An alternative way to create a patch in the credential comprises providing the insert material without the release liner as self-wound polycarbonate tape with partially punched-out patches where thin connecting bridges are used to keep the patches in the tape prior to hot-stamping and then break during hot-stamping, ensuring their separation from the tape and transfer to the polycarbonate substrate.

A heat-sensitive/activated adhesive pattern serves as a means of preliminary attachment of the tape/patch to the polycarbonate substrate layer during hot-stamping and/or temporary attachment of the tape/patch to the release liner where used. Alternatively, a patterned pressure-sensitive/activated adhesive may be used for the same purpose (in which case the feature may be applied to the polycarbonate substrate by a label applicator rather than a hot-stamping machine).

The adhesive may comprise one of the following types:
A pure acrylic emulsion copolymer having a TG below 25 °C and Refractive index below 1.5.
An adhesive which comprises styrene -acrylic emulsion co-polymer containing at least 25% styrene monomer
An adhesive which comprises a polycarbodiimide crosslinker
An adhesive which comprises a polyaziridine crosslinker
An adhesive which comprises unsaturated oligomers and an initiator that generates free radicals when exposed to UV light.
An adhesive which comprises liquid polycarbonate.

Alternatively, the patterned adhesive may be provided on the polycarbonate substrate itself, rather than the insert.

The incorporation of the insert into the credential includes two stages. As shown in Figure 4, the first is application of the insert to a polycarbonate substrate 4 by heat and pressure (in case of heat-sensitive adhesive) or pressure (in case of pressure-sensitive adhesive). The second is lamination in a lamination machine to bond together the various layers 4 to 9 of the credential by thermo-compression.

During the first stage, the adhesive 12 ensures preliminary adhesion of the insert 10 to surface 4a of the polycarbonate substrate 4. The substrate 4 with the attached insert 10 will be used as a layer of the finished credential, advantageously the uppermost transparent layer or the second uppermost layer, transparent or opaque, or the next uppermost layer, transparent or opaque. Where the insert is applied in the form of the tape the adhesion may be achieved by thermal roll-on machinery, such as that used to apply magnetic stripes to bank cards. When the insert is in the form of patch (or label) this may be applied by a hot-stamping press, such as that used to apply holographic patches to paper or plastic documents. The polycarbonate substrate with the attached insert may then be finished to reels of suitable width and length for subsequent reel-based lamination or to sheets of suitable size for subsequent sheetform lamination into finished credentials.

During the second stage of the process, the permanent adhesion of the insert 10 to the polycarbonate layers lying directly above and below it is achieved by thermo-compression bonding during credential lamination. This process may be aided by the secondary activation of the patterned adhesive. Due to the holographic microstructure, the reflective coating and the adhesive all being patterned, on the holographic image side of the insert, and the adhesive (if present) on the other side of the insert, being patterned, areas of the feature free of those layers allow a free flow of polycarbonate material from the insert itself during thermo-compression and its molecular bonding to the adjacent layers of polycarbonate in the structure of the credential. During the lamination process, the uppermost (protective) layer 4, is positioned atop the layer 6 and the insert 10. The layers are then sandwiched between metal plates, which are subsequently subjected to a heat pressure cycle to create a thermo-compression and thereby form a laminate that will subsequently be punched out to a required credential size, for example an ID-1 size card or passport data page.

As can be seen in Figure 1, the insert 10 becomes incorporated and embedded into the layer 5 or both into the substrate 4 and the layer 5, as the case may be. The polycarbonate of the insert 10 becomes fused with the polycarbonate of the layers 4 and 5. Surprisingly, we have found that the uppermost/outermost surface of the credential does not present a raised region due to the underlying presence of the insert, but rather presents a substantially flat surface. Ordinarily it would be considered that the insert could cause some kind of perceptible presence in the outermost layer 4. However, we have found that the overlap region of the layer 4 with the insert is substantially continuous.

As is evident from the above, we have devised a secure, tamper-proof, durable and cost-effective holographic security feature for a polycarbonate document, which is very conveniently compatible with the feature application techniques widely deployed and used in the industry, in this case, hot-stamping or label application, with subsequent lamination, and therefore existing machinery can be used. More particularly, advantages include:
(1) simple application of the security feature to a polycarbonate substrate, using methods established in the industry: hot-stamping or pressure-based label application, which means that existing machinery standard for the identity industry can be used;
(2) superior tamper-resistance of the feature compared to traditional holographic features is ensured by molecular thermo-compression bonding of the free-flowing polycarbonate material of the feature itself to the adjacent layers of the credential;
(3) superior mechanical durability of the credential incorporating the insert (resistance to delamination, bending, torsional stress etc.) compared to one using traditional holographic features is ensured by molecular thermo-compression bonding of the free-flowing polycarbonate material of the feature itself to the adjacent layers of the credential;
(4) if the insert is in form of a stripe is used from edge to opposite edge of the credential, superior chemical durability of the edge areas of the credential compared to one using traditional holographic features is ensured by molecular thermo-compression bonding of the free-flowing polycarbonate material of the insert itself to the adjacent layers of the credential;
(5) superior visual appearance and surface quality of the credential incorporating the insert is ensured by the free-flow of the polycarbonate of the insert itself and its blending with the adjacent layers of the PC document, resulting in smooth appearance of the surface of the document, devoid of any noticeable visual or tactile borders, roughness or ridges. As can be seen in Figure 1 the cross-sectional profile of the outermost layer 4 does not show any perceptible indication of the underlying presence of the insert since that surface of that layer is substantially flat;
(6) superior cost-efficiency of the insert compared to full-surface holographic polycarbonate credential features due to a smaller area of polycarbonate required to produce each insert.

In alternative embodiments, more than one insert may be incorporated, and these may be provided at different levels within the credential. Further, the insert may be provided with scalloped edges around some or all of its perimeter. Further, the insert may be positioned, wholly or partially, in a transparent window or transparent area of the credential, providing the visibility of the holographic image from either side of the document. Further, the insert may be positioned in the area where critical personal data of the credential, such as the bearer's photograph, will be applied during personalisation. In this case laser personalisation of such critical data, advantageously effected on the laser-sensitive polycarbonate layer lying below the feature, will be reliably secured from tamper by the feature. Yet further, the adhesive may comprise infrared or UV sensitive pigments, such as photoluminescent or photochromic pigments.

## Claims

1. A holographic insert (10) for use in producing a laminated credential, the insert comprising
a polycarbonate layer and a holographic feature (11), and at least one side (10a) of the insert provided with an adhesive (12), and at least half of the surface area of the said side being substantially devoid of adhesive, the adhesive being provided as a pattern, and said holographic feature being at least one of a holographic feature embossed onto the polycarbonate layer, and a holographic feature UV cast onto the polycarbonate layer, and further wherein the holographic feature is arranged to cover only part of the surface area of the surface of the insert on which it is provided.

2. A holographic insert as claimed in claim 1 in which a major proportion of the surface area of the side (10a) is substantially devoid of adhesive (12).

3. A holographic insert as claimed in claim 1 or claim 2 in which the adhesive (12) comprises a heat and/or pressure sensitive adhesive.

4. A holographic insert as claimed in any preceding claim in which the adhesive (12) is arranged on the surface area (10a) as at least one of a continuous pattern and a discontinuous pattern.

5. A holographic insert as claimed in any preceding claim in which an opposite surface of the insert (10) is also provided with adhesive (12).

6. A holographic insert as claimed in any preceding claim which substantially has the form of a discrete patch or strip, which may be presented in reels.

7. A holographic insert as claimed in any preceding claim in which the adhesive (12) is provided on the same side (10a) as that on which the holographic feature (11) is provided.

8. A holographic insert as claimed in any preceding claim in which at least some of the surface area of a surface on which the adhesive (12) and holographic feature (11) is provided is devoid of the presence of adhesive and holographic feature, and any reflective layers.

9. A holographic insert as claimed in any preceding claim which is provided in reel or sheet form.

10. A method of producing a laminated credential comprising applying a holographic insert (10) to a first polycarbonate layer, the insert comprising polycarbonate and a holographic feature (11), subsequently arranging that the insert is located between the first polycarbonate layer (4) and a second polycarbonate layer (5), and then applying a thermo-compression to the polycarbonate layers such that the polycarbonate of the insert is caused to fuse with polycarbonate of the polycarbonate layers, and thereby become embedded in the credential produced, wherein an adhesive (12) is provided between the first polycarbonate layer and the insert, and at least half of the contact area between the insert and the first polycarbonate layer is substantially devoid of adhesive, and the adhesive is provided as a pattern, and wherein said holographic feature is at least one of a holographic feature embossed onto the polycarbonate layer of the insert, and a holographic feature UV cast onto the polycarbonate layer of the insert.

11. A method as claimed in claim 10 in which the step of applying the holographic insert (10) to the first polycarbonate layer (4) comprises attaching the insert to said layer.

12. A method as claimed in claim 11 in which the step of applying the insert (10) to the first polycarbonate layer (4) comprises attaching the insert to said layer by way of the adhesive (12).

13. A method as claimed in any of claims 10 to 12 in which the thermo-compression step causes the insert (10) to become embedded at an interface region between the first and second polycarbonate layers (4, 5).

14. A method as claimed in any of claims 10 to 13 in which the thickness of the insert (10) is less than that of the thickness of the first polycarbonate layer (4).

15. A laminated credential comprising a holographic insert (10), first and second polycarbonate layers (4, 5), the holographic insert comprising polycarbonate material and a holographic feature (11), wherein the insert is embedded at an interface region between the first and second layers and the polycarbonate of the insert is fused with the polycarbonate of the said first and second layers, wherein an adhesive (12) is provided between the first polycarbonate layer and the insert, and at least half of the contact area between the insert and the first polycarbonate layer is substantially devoid of adhesive, and the adhesive is provided as a pattern, and the fusion between the insert and the first polycarbonate layer occurs in areas between said layers devoid of adhesive, and wherein said holographic feature is at least one of a holographic feature embossed onto the polycarbonate layer of the insert, and a holographic feature UV cast onto the polycarbonate layer of the insert.

16. A laminated credential as claimed in claim 15 wherein the first polycarbonate layer (4) provides a top layer of the credential.

17. A laminated credential as claimed in claim 15 wherein the first polycarbonate layer (4) is a second uppermost layer of the credential.

18. A laminated credential as claimed in claim 15 wherein the first polycarbonate layer (4) forms an internal layer of the credential.

19. A laminated credential as claimed in any of claims 15 to 18 wherein an outermost/external surface profile of the credential is substantially devoid of any visual or tactile indication of the presence underlying insert (10).

20. A laminated credential as claimed in any of claims 15 to 19 in which an adhesive (12) is provided between the insert (10) and the second polycarbonate layer (5).

## Patentansprüche

1. Holografische Einfügung (10) zur Verwendung bei der Herstellung eines laminierten Ausweises, wobei die Einfügung umfasst
eine Polycarbonat-Schicht und ein holografisches Merkmal (11), und wobei mindestens eine Seite (10a) der Einfügung mit einem Klebstoff (12) versehen ist und mindestens die Hälfte der Fläche der Seite im Wesentlichen frei von Klebstoff ist, wobei der Klebstoff in einem Muster bereitgestellt wird, und wobei das holografische Merkmal mindestens eines von einem holografischen Merkmal, das in die Polycarbonat-Schicht eingeprägt ist, und einem holografischen Merkmal, das durch UV-Guss auf die Polycarbonat-Schicht aufgetragen wird, ist, und wobei ferner das holografische Merkmal eingerichtet ist, um nur einen Teil der Fläche der Oberfläche der Einfügung, auf der es bereitgestellt wird, abzudecken.

2. Holografische Einfügung nach Anspruch 1, wobei ein Hauptanteil der Fläche der Seite (10a) im Wesentlichen frei von Klebstoff (12) ist.

3. Holografische Einfügung nach Anspruch 1 oder Anspruch 2, wobei der Klebstoff (12) einen wärme- und/oder druckempfindlichen Klebstoff umfasst.

4. Holografische Einfügung nach einem der vorhergehenden Ansprüche, wobei der Klebstoff (12) auf einer Fläche (10a) als mindestens eines von einem durchgehenden Muster und einem nicht durchgehenden Muster angeordnet ist.

5. Holografische Einfügung nach einem der vorhergehenden Ansprüche, wobei eine gegenüberliegende Oberfläche der Einfügung (10) ebenfalls mit Klebstoff (12) versehen ist.

6. Holografische Einfügung nach einem der vorhergehenden Ansprüche, die im Wesentlichen die Form eines diskreten Fleckens oder Streifens aufweist, der auf Rollen vorliegen kann.

7. Holografische Einfügung nach einem der vorhergehenden Ansprüche, wobei der Klebstoff (12) auf der gleichen Seite (10a) bereitgestellt wird wie diejenige, auf der das holografische Merkmal (11) bereitgestellt wird.

8. Holografische Einfügung nach einem der vorhergehenden Ansprüche, wobei mindestens ein Teil der Fläche einer Oberfläche, auf welcher der Klebstoff (12) und das holografische Merkmal (11) bereitgestellt werden, frei vom Vorliegen von Klebstoff und holografischen Merkmalen und eventuellen reflektierenden Schichten ist.

9. Holografische Einfügung nach einem der vorhergehenden Ansprüche, die in Rollen- oder Blattform bereitgestellt wird.

10. Verfahren zum Herstellen eines laminierten Ausweises, umfassend das Auftragen einer holografischen Einfügung (10) auf eine erste Polycarbonat-Schicht, wobei die Einfügung Polycarbonat und ein holografisches Merkmal (11) umfasst, anschließendes Einrichten, dass sich die Einfügung zwischen der ersten Polycarbonat-Schicht (4) und einer zweiten Polycarbonat-Schicht (5) befindet, und dann Anwenden einer Thermokompression auf die Polycarbonat-Schichten, so dass veranlasst wird, dass das Polycarbonat der Einfügung mit dem Polycarbonat der Polycarbonat-Schichten verschmilzt und dadurch in dem hergestellten Ausweis eingebettet wird, wobei ein Klebstoff (12) zwischen der ersten Polycarbonat-Schicht und der Einfügung bereitgestellt wird, und mindestens die Hälfte der Kontaktfläche zwischen der Einfügung und der ersten Polycarbonat-Schicht im Wesentlichen frei von Klebstoff ist, und der Klebstoff in einem Muster bereitgestellt wird, und wobei das holografische Merkmal mindestens eines von einem holografischen Merkmal, das auf die Polycarbonat-Schicht der Einfügung eingeprägt wird, und einem holografischen Merkmal, das durch UV-Guss auf die Polycarbonat-Schicht der Einfügung aufgetragen wird, ist.

11. Verfahren nach Anspruch 10, wobei der Schritt des Auftragens der holografischen Einfügung (10) auf die erste Polycarbonat-Schicht (4) das Anbringen der Einfügung an der Schicht umfasst.

12. Verfahren nach Anspruch 11, wobei der Schritt des Auftragens der Einfügung (10) auf die erste Polycarbonat-Schicht (4) das Anbringen der Einfügung an der Schicht anhand des Klebstoffs (12) umfasst.

13. Verfahren nach einem der Ansprüche 10 bis 12, wobei der Schritt der Thermokompression veranlasst, dass die Einfügung (10) an einer Grenzflächenregion zwischen den ersten und zweiten Polycarbonat-Schichten (4, 5) eingebettet wird.

14. Verfahren nach einem der Ansprüche 10 bis 13, wobei die Dicke der Einfügung (10) geringer als die Dicke der ersten Polycarbonat-Schicht (4) ist.

15. Laminierter Ausweis, umfassend eine holografische Einfügung (10), erste und zweite Polycarbonat-Schichten (4, 5), wobei die holografische Einfügung ein Polycarbonat-Material und ein holografisches Merkmal (11) umfasst, wobei die Einfügung an einer Grenzflächenregion zwischen den ersten und zweiten Schichten eingebettet ist und das Polycarbonat der Einfügung mit dem Polycarbonat der ersten und zweiten Schichten verschmilzt, wobei ein Klebstoff (12) zwischen der ersten Polycarbonat-Schicht und der Einfügung bereitgestellt wird, und mindestens die Hälfte der Kontaktfläche zwischen der Einfügung und der ersten Polycarbonat-Schicht im Wesentlichen frei von Klebstoff ist, und der Klebstoff in einem Muster bereitgestellt wird, und die Verschmelzung zwischen der Einfügung und der ersten Polycarbonat-Schicht in Bereichen zwischen den Schichten erfolgt, die frei von Klebstoff sind, und wobei das holografische Merkmal mindestens eines von einem holografischen Merkmal, das auf der Polycarbonat-Schicht der Einfügung eingeprägt wird, und einem holografischen Merkmal, das durch UV-Guss auf die Polycarbonat-Schicht der Einfügung aufgetragen wird, ist.

16. Laminierter Ausweis nach Anspruch 15, wobei die erste Polycarbonat-Schicht (4) eine obere Schicht des Ausweises bereitstellt.

17. Laminierter Ausweis nach Anspruch 15, wobei die erste Polycarbonat-Schicht (4) eine zweitoberste Schicht des Ausweises ist.

18. Laminierter Ausweis nach Anspruch 15, wobei die erste Polycarbonat-Schicht (4) eine interne Schicht des Ausweises bildet.

19. Laminierter Ausweis nach einem der Ansprüche 15 bis 18, wobei ein äußerstes/externes Oberflächenprofil des Ausweises im Wesentlichen frei von einer visuellen oder fühlbaren Angabe des Vorliegens einer darunterliegenden Einfügung (10) ist.

20. Laminierter Ausweis nach einem der Ansprüche 15 bis 19, wobei ein Klebstoff (12) zwischen der Einfügung (10) und der zweiten Polycarbonat-Schicht (5) bereitgestellt wird.

## Revendications

1. Insert holographique (10) pour une utilisation dans la production d'une pièce d'identité stratifiée, l'insert comprenant :
une couche de polycarbonate et une caractéristique holographique (11), et au moins un côté (10a) de l'insert étant doté d'un adhésif (12), et au moins la moitié de l'aire de surface dudit coté étant sensiblement dépourvue d'adhésif, l'adhésif étant disposé en tant que motif, et ladite caractéristique holographique étant au moins l'une d'une caractéristique holographique en relief sur la couche de polycarbonate et d'une caractéristique holographique coulée sous UV sur la couche de polycarbonate, et en outre la caractéristique holographique étant disposée pour recouvrir seulement une partie de l'aire de surface de la surface de l'insert sur laquelle elle est disposée.

2. Insert holographique selon la revendication 1, dans lequel une proportion majeure de l'aire de surface du côté (10a) est sensiblement dépourvue d'adhésif (12).

3. Insert holographique selon la revendication 1 ou la revendication 2, dans lequel l'adhésif (12) comprend un adhésif sensible à la chaleur et/ou à la pression.

4. Insert holographique selon l'une quelconque des revendications précédentes, dans lequel l'adhésif (12) est disposé sur l'aire de surface (10a) en tant qu'au moins l'un d'un motif continu et d'un motif discontinu.

5. Insert holographique selon l'une quelconque des revendications précédentes, dans lequel une surface opposée de l'insert (10) est également dotée d'un adhésif (12).

6. Insert holographique selon l'une quelconque des revendications précédentes, qui a sensiblement la forme d'un timbre discret ou d'une bande discrète, qui peut être présenté(e) en bobines.

7. Insert holographique selon l'une quelconque des revendications précédentes, dans lequel l'adhésif (12) est disposé du même côté (10a) que celui sur lequel la caractéristique holographique (11) est disposée.

8. Insert holographique selon l'une quelconque des revendications précédentes, dans lequel au moins une partie de l'aire de surface d'une surface sur laquelle l'adhésif (12) et la caractéristique holographique (11) sont disposés est dépourvue de la présence d'adhésif et de caractéristique holographique, et de toutes couches réfléchissantes.

9. Insert holographique selon l'une quelconque des revendications précédentes, qui est fourni sous la forme de bobines ou de feuilles.

10. Procédé de production d'une pièce d'identité stratifiée, comprenant : appliquer un insert holographique (10) sur une première couche de polycarbonate, l'insert comprenant du polycarbonate et une caractéristique holographique (11), par la suite s'arranger pour que l'insert soit situé entre la première couche de polycarbonate (4) et une seconde couche de polycarbonate (5), puis appliquer une thermo-compression aux couches de polycarbonate de telle sorte que le polycarbonate de l'insert soit amené à fusionner avec le polycarbonate des couches de polycarbonate et à être par là noyé dans la pièce d'identité produite, un adhésif (12) étant disposé entre la première couche de polycarbonate et l'insert, et au moins la moitié de l'aire de contact entre l'insert et la première couche de polycarbonate étant sensiblement dépourvue d'un adhésif, et l'adhésif étant disposé sous la forme d'un motif, et ladite caractéristique holographique étant au moins l'une d'une caractéristique holographique en relief sur la couche de polycarbonate de l'insert et d'une caractéristique holographique coulée sous UV sur la couche de polycarbonate de l'insert.

11. Procédé selon la revendication 10, dans lequel l'étape d'application de l'insert holographique (10) sur la première couche de polycarbonate (4) comprend la fixation de l'insert sur ladite couche.

12. Procédé selon la revendication 11, dans lequel l'étape d'application de l'insert (10) sur la première couche de polycarbonate (4) comprend la fixation de l'insert sur ladite couche au moyen de l'adhésif (12).

13. Procédé selon l'une quelconque des revendications 10 à 12, dans lequel l'étape de thermo-compression amène l'insert (10) à être noyé à une région d'interface entre les première et seconde couches de polycarbonate (4, 5).

14. Procédé selon l'une quelconque des revendications 10 à 13, dans lequel l'épaisseur de l'insert (10) est inférieure à l'épaisseur de la première couche de polycarbonate (4).

15. Pièce d'identité stratifiée comprenant un insert holographique (10), des première et seconde couches de polycarbonate (4, 5), l'insert holographique comprenant une matière de polycarbonate et une caractéristique holographique (11), l'insert étant noyé à une région d'interface entre les première et seconde couches et le polycarbonate de l'insert étant fusionné avec le polycarbonate desdites première et seconde couches, un adhésif (12) étant disposé entre la première couche de polycarbonate et l'insert, et au moins la moitié de l'aire de contact entre l'insert et la première couche de polycarbonate étant sensiblement dépourvue d'adhésif, et l'adhésif étant disposé sous la forme d'un motif, et la fusion entre l'insert l'insert et la première couche de polycarbonate ayant lieu dans des zones entre lesdites couches dépourvues d'adhésif, et ladite caractéristique holographique étant au moins l'une d'une caractéristique holographique en relief sur la couche de polycarbonate de l'insert et d'une caractéristique holographique coulée sous UV sur la couche de polycarbonate de l'insert.

16. Pièce d'identité stratifiée selon la revendication 15, dans laquelle la première couche de polycarbonate (4) fournit une couche supérieure de la pièce d'identité.

17. Pièce d'identité stratifiée selon la revendication 15, dans laquelle la première couche de polycarbonate (4) est une seconde couche la plus haute de la pièce d'identité.

18. Pièce d'identité stratifiée selon la revendication 15, dans laquelle la première couche de polycarbonate (4) forme une couche interne de la pièce d'identité.

19. Pièce d'identité stratifiée selon l'une quelconque des revendications 15 à 18, dans laquelle un profil de surface la plus haute/externe de la pièce d'identité est sensiblement dépourvu de toute indication visuelle ou tactile de la présence sous-jacente de l'insert (10) .

20. Pièce d'identité stratifiée selon l'une quelconque des revendications 15 à 19, dans laquelle un adhésif (12) est disposé entre l'insert (10) et la seconde couche de polycarbonate (5).
